Europäisches Patentamt

European Patent Office

Office européen des brevets

(11) Publication number: **0 338 856**
**A2**

# EUROPEAN PATENT APPLICATION

(21) Application number: **89304003.0**

(22) Date of filing: **21.04.89**

(51) Int. Cl.⁴: **G 02 B 6/44**

(30) Priority: **22.04.88 GB 8809594**

(43) Date of publication of application:
**25.10.89 Bulletin 89/43**

(84) Designated Contracting States:
**AT BE CH DE ES FR GB GR IT LI LU NL SE**

(71) Applicant: **BICC Public Limited Company**
**Devonshire House Mayfair Place**
**London W1X 5FH (GB)**

**CORNING LIMITED**
**Wear Glass Works**
**Sunderland SR4 6EJ (GB)**

(72) Inventor: **Davey, Rodney John**
**9 Railton Close Rainhill**
**Prescot Merseyside L35 0QD (GB)**

**Handley, Graham Robert**
**79 Arrowe Park Road**
**Upton Wirral L49 0QG (GB)**

**Ward-Smith, Alfred John, Dr.**
**11 The Ridgeway**
**Bracknell Berkshire, RG12 3QU (GB)**

(74) Representative: **Boon, Graham Anthony et al**
**Elkington and Fife Beacon House 113 Kingsway**
**London, WC2B 6PP (GB)**

(54) Method of conveying an optical fibre member and an apparatus for use therein.

(57) A method is provided of conveying an optical fibre member (1) along a tubular passageway (2). Slack is formed in the fibre at the upstream end of the passageway (2) and air or other fluid is caused to flow along the passageway in the intended direction of travel of the fibre member (1). The fibre member is sufficiently flexible to permit the slack to propagate down the fibre member. Preferably, the fibre member comprises a single optical fibre surrounded by a buffering layer.

Fig. 1a

Fig. 1b

Fig. 1c

Fig. 1d

EP 0 338 856 A2

## Description

### Method of conveying an optical fibre member and an apparatus for use therein.

This invention relates to a method of conveying an optical fibre member along a tubular passageway, and an apparatus for use therein.

A method is known from EP-A-108590 for conveying an optical fibre member along a tubular passageway using a flow of air which travels along the passageway in the desired direction of travel of the optical fibre member. The method enables optical fibre members to be installed in tubular passageways, hereinafter referred to as "ducts", which have already been placed in situ.

EP-A-108590 describes in particular an optical fibre member suitable for installation by the above method, which comprises a plurality of optical fibres, for example from six to eight such fibres, contained within a common sheath. EP-A-157610 describes a particular design of such optical fibre member.

It has been found that, at least for some purposes, it is preferable, rather than using a multifibre structure, to use a structure in which a single fibre is surrounded by its own individual sheath, hereinafter sometimes referred to a "buffering layer". Such a structure is referred to below as a "single buffered fibre". Compared to a multi-fibre unit a single buffered fibre can be very flexible. It has been found that, for a sufficiently flexible optical fibre member a method of installation is possible having certain advantages which appear from what is said below.

According to the present invention there is provided a method of conveying an optical fibre member along a tubular passageway, which comprises introducing slack into the said fibre member at the upstream end of the passageway, and causing air or other fluid to flow along the passageway in the intended direction of travel of the said fibre member, the fibre member being sufficiently flexible to permit the slack to propagate along the fibre member.

This invention further provides an apparatus for feeding an optical fibre member into a tubular passageway, comprising means for introducing slack into the said fibre member at the upstream end of the passageway to produce a ripple therein.

This technique enables installation of fibre members at reduced pressures, for a given length of installation and duct diameter, or an increased rate of installation for a given pressure, length and duct diameter. Alternatively, a longer length of fibre member can be installed using a given pressure. Since fluid flow rate is related to pressure, the possibility of using a reduced pressure implies the possibility of using a smaller bore duct for a given inlet pressure.

It has been found that, under appropriate conditions, an optical fibre member, such as a single buffered fibre, which has the appropriate degree of flexibility can be conveyed, at least in part, by the propagation of slack down the optical fibre member. It has been found that such propagation will occur with a sufficiently flexible fibre, provided slack is introduced in the fibre at the upstream end of the duct.

The physical mechanism by which slack is conveyed down the fibre is complex. No attempt is made herein to provide a complete theoretical analysis of the mechanism, and such statements of theory as are made herein are given only as a guide.

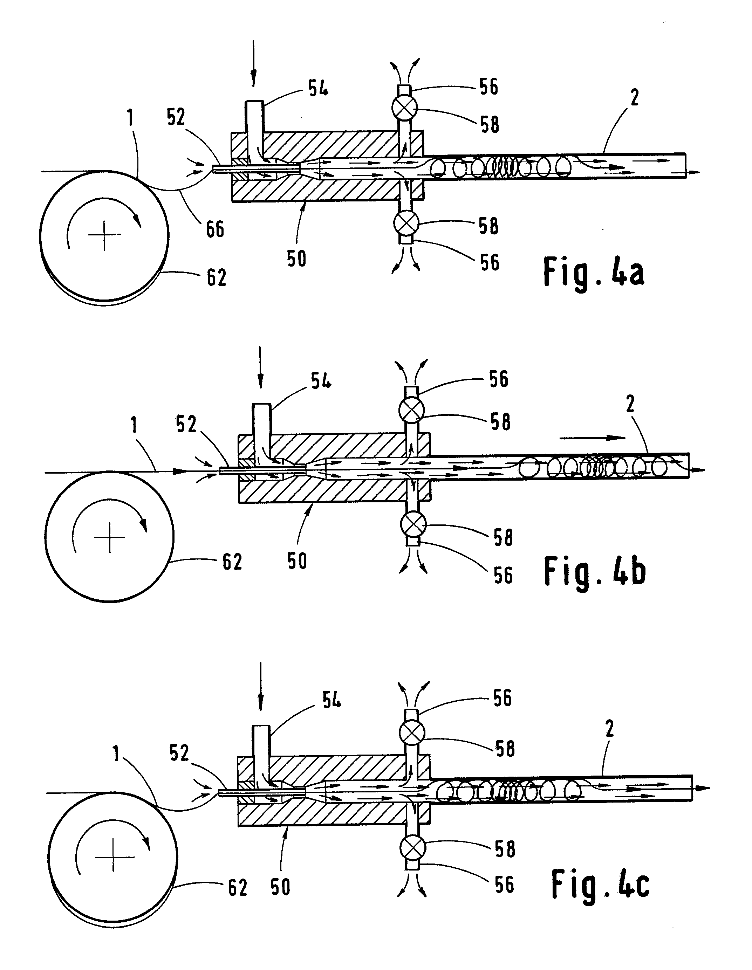

It is believed, however, that at least in the upstream region of the duct, propagation involves a travelling, wave. It is to be noted that in the accompanying drawings the slack is variously represented either as a generally sinusoidal ripple or succession of ripples and (as in Figures 4a to 4c) in a helical form. It is to be understood that all these representations are diagrammatic, though it is believed that the slack normally takes a generally helical form, at least in the upstream region of the duct, though with a longer pitch than that shown diagrammatically in Figures 4a to 4c.

It is further to be noted that the use of the term "slack" is not to be taken as implying the absence of forces within the fibre member in the relevant region, and it is used as convenient shorthand to denote the presence of an excess length of fibre in the region.

In the accompanying drawing:

Figures 1a to 1d show the principle of the method of the present invention in diagrammatic form and not to scale;

Figures 2a to 2e show successive stages in the operation of the method of the invention, using a venturi device and a fibre retention device;

Figures 3a to 3d show successive stages in the operation of the method of the invention, using a wheeled head and a fibre retention device;

Figures 4a to 4c show successive stages in the operation of the method of the invention, using a venturi device, as in Figures 2a to 2e, but no fibre retention device; and

Figures 5a and 5b show a capstan (which forms part of what is shown in Figures 4a to 4c) and a fibre reel, in a tensioned state and in a state of zero tension, respectively.

Figure 6 is a graph showing the length in one ripple for a flexible buffered fibre compared with that for a stiffer fibre member.

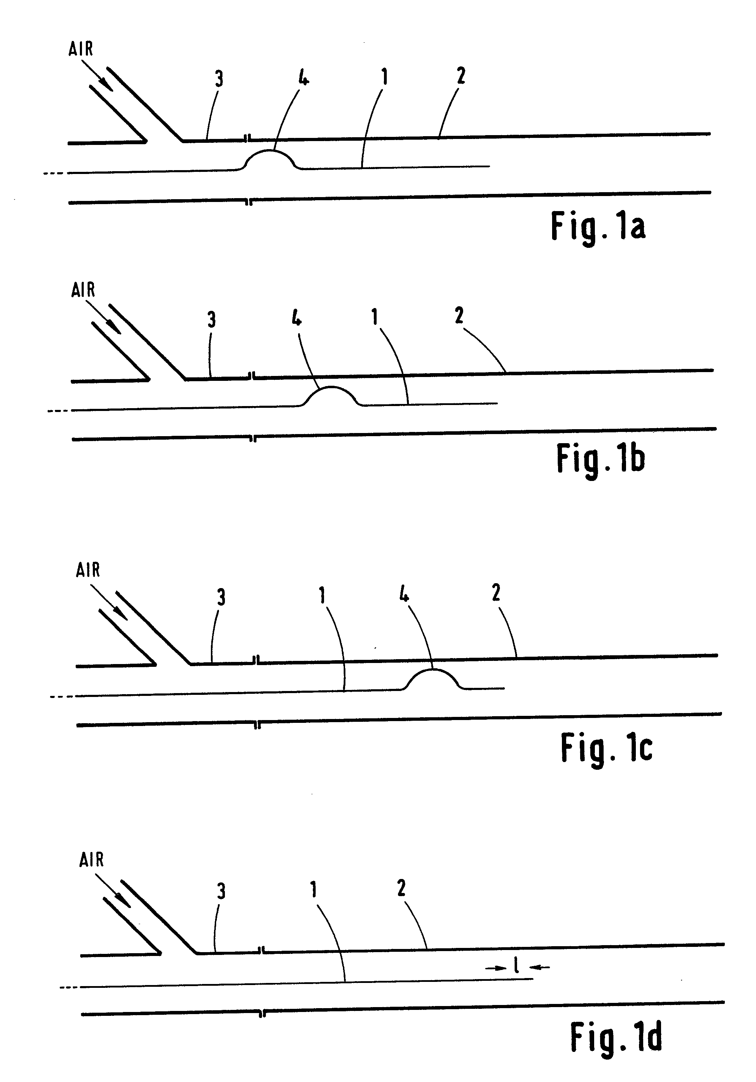

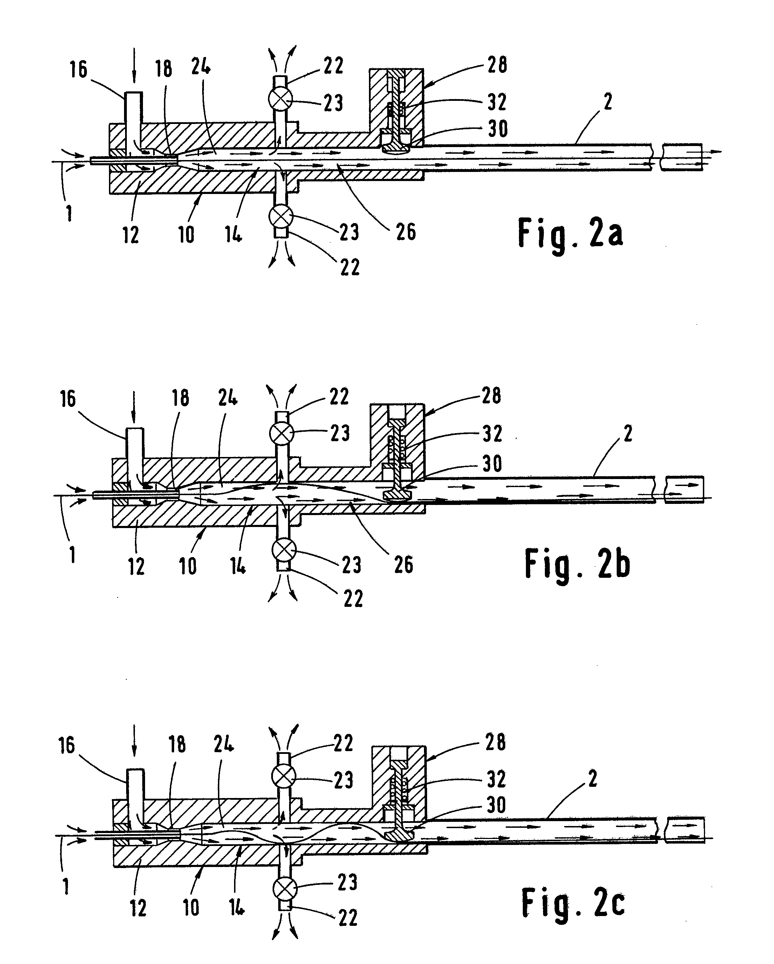

Figure 1a shows a stage where part of an optical fibre member 1 has been introduced into a duct 2 by means of a blowing head 3. One such blowing head which may be used is a blowing head containing a venturi as described in our pending UK application 8827460.0, and as also described below with reference to Figures 2a to 2e.

Figure 1a shows the optical fibre member 1 with slack at the upstream end of the duct 2, this slack taking the form of a ripple 4. For convenience of illustration the ripple is shown as being approximately sinusoidal, but it must be understood that, depending on the conditions, the ripple might assume some other shape. It must also be understood that although the description assumes that only a single ripple is propagating along the fibre member there are preferably many such ripples propagating simultaneously.

Some ways in which a ripple may be generated in the fibre member, for subsequent propagation along the fibre member, are described in more detail below. However, some general points may be noted at this stage. The formation of the ripple may be assisted either by moving the fibre member from side to side, i.e. by a transverse oscillation, or it may be generated by an axial oscillation, for example by feeding the fibre member to the upstream end of the duct via a mechanism which continuously receives the fibre member but which intermittently prevents its being passed to the duct. A particular device may be provided for deliberately generating these ripples. However, under some circumstances the ripples may be automatically generated, as will be explained further below.

A major factor affecting the formation of ripples is the elastic behaviour, characterised by the flexural rigidity of the fibre member. If the fibre member is too stiff or if the fibre diameter is too large in relation to the duct bore diameter, it will not be possible to generate a ripple of sufficiently great amplitude and sufficiently short wavelength to be of any practical use.

It is believed to be optimum to generate a ripple whose maximum angle to the overall direction of travel of the fibre member is not substantially less than 90°, i.e. is as near to 90° as can be achieved without risk of the angle becoming greater than 90° and the fibre member thus folding back on itself.

Because there is a pressure gradient down the length of the duct 2, with the pressure at the downstream end being lower than the pressure at the upstream end, there is a pressure differential across the ripple which exerts forces on it urging it in the downstream direction. Under appropriate conditions, these forces cause the ripple to propagate down the length of the fibre member, as shown in Figures 1b and 1c.

If we define $F_{np1}$ as the normal pressure force acting on the leading side of the wave, and $F_{np2}$ as the normal pressure force acting on the trailing side of the wave, the work done by the forces in moving through a distance $\delta x$ is $(F_{np1} + F_{np2})\,\delta x$.

If desired the air supply can be pulsed. Pulsing of the air supply will cause local perturbations in the pressure profile to travel along at least part of the duct. These will exaggerate the local pressure gradient, thus increasing the normal pressure force. The following analysis, however, ignores any such pulsing.

The wave moves forward if this term exceeds the contribution of two terms: i) the degradation of energy by internal friction as the wave deforms the fibre member, $E_{int}$, and ii) the energy required to "peel" the fibre member at the points of contact between the fibre member and the duct $E_{surf}$.

Thus wave transport requires

$$(F_{np1} + F_{np2})\,\delta x > E_{int} + E_{surf} \quad (5)$$

By analogy between the wave motion and rolling friction it is evident that the terms $E_{int}$ and $E_{surf}$ can be made very small under the appropriate conditions.

To a first approximation the normal pressure drag forces are proportional to $(V_g - V_w)^2$, where the absolute velocity of the wave relative to the duct $V_w = (V_{WA} + V_1)$, with $V_1$ being the velocity at which the fibre member is moving forward due to viscous drag and $V_{WA}$ being the velocity of the wave with respect to the fibre member. Hence for $F_{np1} \rightarrow 0$ $F_{np2} \rightarrow 0$

$$V_w \approx V_g \quad (6)$$

where $V_g$ is the mean flow velocity of the gas past the fibre member. Generally $V_g \gg V_1$ and so significantly wave transport takes place at wave speeds close to the mean flow velocity of the gas. It will subsequently be demonstrated that $V_g$ varies substantially with the distance x down the duct.

Another important factor to note from the above simple analysis is that the wave speed is much higher than the local translation velocity, $V_1$.

In practice the above analysis is an over-simplification. An amount of strain energy is created during the initial formation of the wave, and subsequently there is a constant tendency for the wave to release that energy, thereby increasing the wavelength of the wave. The manner in which the energy may be released by a wave depends upon whether or not there are other waves in close proximity.

Ignoring for the moment the effect of wave transport, consider a short section $\Delta x$ of duct through which a single fibre member has passed. Also assume for the moment that the fibre is at rest. If is the surface shear stress (for the purposes of the analysis assumed equal on the surfaces of the fibre member and the tube wall) then a simple force balance over the small element of length $\Delta x$ yields

$$\Upsilon = \frac{\Delta p}{\Delta x}\,\frac{(D_B - D_F)}{4} \quad (7)$$

where $D_B$ and $D_F$ are respectively the diameters of the duct and fibre, and p is the drop in pressure across the element. The mass flow rate of air past the fibre member is given by

$$m = \rho\,A\,V_g \quad (8)$$

where $\rho$ is the local density (a function of x), $V_g$ is the local mean flow velocity (also a function of x), and A is the cross-sectional area through which the flow passes.

The density $\rho$ satisfies the equation of state for a perfect gas

$\rho = \frac{p}{RT}$ (9)

where p is the local pressure (a function of x), R is the gas constant and T is the temperature.

The pressure gradient is given by

$$\frac{\Delta p}{\Delta x} = \frac{4f}{D_E} \cdot \frac{1}{2} \rho V_g^2 \qquad (10)$$

where $D_E = (D_B - D_F)$ and f is the friction factor.

Equations (7), (8), (9) and (10) can be combined to yield

$\tau = f \times \frac{1}{2} (\frac{m}{A})^2 \frac{RT}{p}$ (11)

The quantities f,m,A,R and T can all be regarded as constant. Hence equation (11) gives the important result that the surface shear stress acting on the fibre member is inversely proportional to the local pressure. The local mean flow velocity can also be shown to vary inversely as the pressure.

The viscous drag force acting on the fibre member is given by

$$F_v = \int_0^{l_F} \tau \pi D_F \, dx \qquad (12)$$

where $l_F$ if the installed length of the fibre member.

Since the pressure decreases with increasing x, equations (11) and (12) demonstrate the important result that the contribution of the surface shear stress to the viscous drag force is not evenly distributed over the surface of the fibre member. The smallest contribution occurs where the fibre member enters the duct and the contribution increases progressively so that the largest contribution is at the leading end of the fibre member. This fact is important in assessing the significance of wave transport.

When the fibre member is moving through the duct the relative motion between the fibre member and the mean flow velocity adds further emphasis to the matter under consideration. The shear stress acting on the fibre is a function of the relative velocity $(V_g - V_1)$, and so for a moving fibre the imbalance between the contributions of the surface shear stress between the leading and trailing ends of the fibre member are even more severe than for the fibre member at rest.

Since the ripples or waves are formed just upstream of or at the entry plane of the duct the wave transport mechanism is most active and significant in the sections immediately downstream of the entry plane of the duct. It is in just this region that the viscous drag mechanism is least effective. Thus the contributions of viscous drag and wave transport are seen to be complementary.

The shape of the wave and the rate of propagation are influenced by the interaction of elastic, surface, aerodynamic, and gravitational forces. The magnitudes and relative importance of the forces change as the wave advances.

Returning now to Figures 1a to 1d, finally, as shown in Figure 1d, the ripple disappears at the downstream end of the optical fibre member, and the optical fibre member is seen to have advanced by a distance indicated as 1 in Figure 1d. In effect, therefore, the slack in the fibre member has propagated down the fibre member as a ripple and produced fibre advance.

For the sake of clarity Figures 1a to 1d are drawn on the basis that wave transport is the sole mechanism by which the fibre member advances, and so the leading tip of the fibre member is shown as remaining stationary between Figure 1a and Figure 1c. In practice this may not be so since there will always be at least one other force operating on the whole length of the fibre member, namely viscous drag, and the effect of viscous drag is complementary to the effect of wave propagation, as stated above.

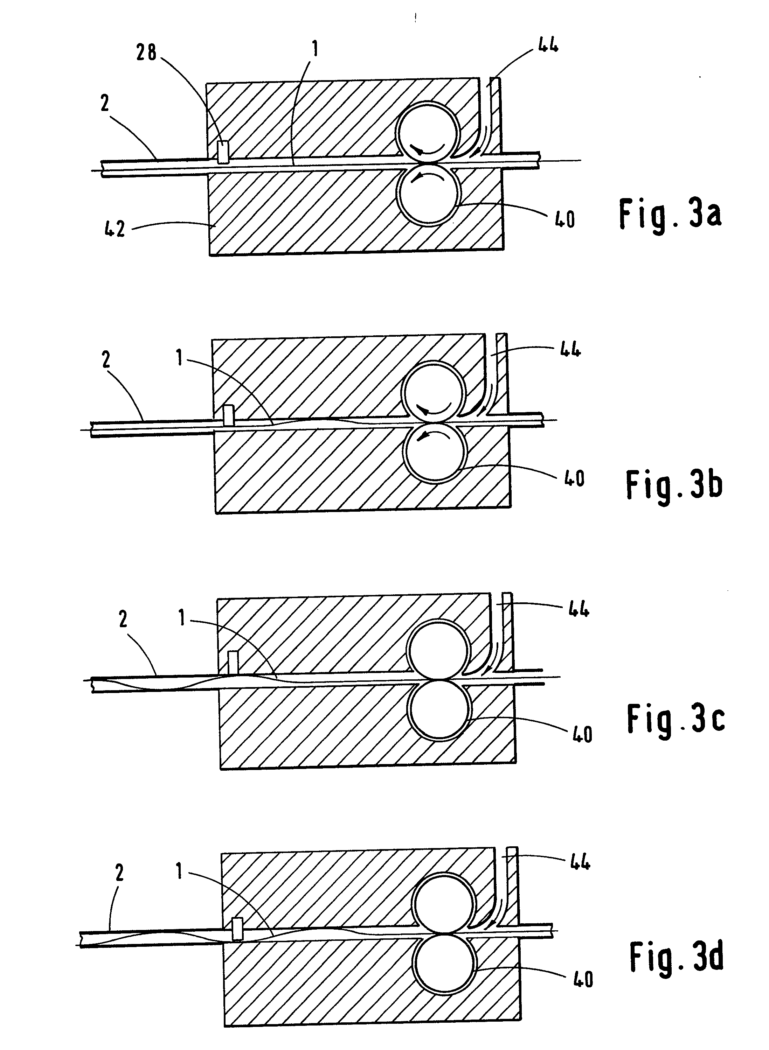

As an illustration of the degree of flexibility required for an optical fibre member to be transported by wave propagation mention may be made of the flexural rigidity of the optical fibre, which is the product of Young's modulus and the second moment of area and is normally denoted as EI. In the case of an optical fibre member having the construction shown in Figure 3 of EP-A-157610, in which seven optical fibres are disposed in a close-packed array and surrounded by an inner sheath which holds them together and an outer foamed sheath, the value of EI is of the order of $10^{-4}$ $Nm^2$. The value of EI for the same construction, but with four optical fibres rather than seven, is of the same order.

By contrast, consider a single buffered fibre having an inner silica portion whose outer diameter is 125 microns, an acrylate coating to bring the diameter up to 250 microns and a buffering layer of foamed ethylene vinyl acetate to give an overall diameter of 580 microns. The use of foamed material has the beneficial effect of reducing weight, for a given diameter. Such a structure can be made, for example, by the method and apparatus disclosed in our copending application No. 8809595.5 and entitled "Method and apparatus for making an optical fibre member". An optical fibre member produced by such a method and apparatus has the characteristic that the foam sheath is not bonded to the optical fibre itself so that the optical fibre is free to slide with respect to the sheath when the optical fibre member bends. A fibre made as just described was found to have a value of EI equal to $0.85 \times 10^{-6}$ $Nm^2$. Its kinetic coefficient of friction with respect to medium density polyethylene, of which the duct may appropriately be made, as measured by means of the tilting table method, was found to be 0.3. Such a fibre was found in practice to be capable of being conveyed to a significant extent by the propagation of slack in a duct of 3.5 mm internal diameter, as is shown for example by Table 1 below. The method of the present invention is used preferably to install a fibre member having an EI value of less than $10^{-4}$ Nm$^2$, more preferably less than $10^{-5}$ Nm$^2$, and still more preferably less than $10^{-6}$ Nm$^2$.

Several fibres can be conveyed simultaneously in this way, with each fibre travelling at approximately the same speed.

Figures 2a to 2e show successive stages in the operation of an embodiment of a method of the invention, in which the optical fibre member 1 is fed into the duct 2 by a venturi. Referring first to Figure 2a, it can be seen that the optical fibre member enters a venturi device 10. The device 10 comprises a body 12 defining an elongate passage 14 the downstream end of which communicates with the duct 2. Adjacent its upstream end, the passage 14 has a side arm 16 to which is connected a source of gas under pressure, preferably a source of compressed air. Such a source can be of any conventional type. The passage 14 is constricted on the downstream side of the side arm 16 to define a constriction 18. A tube 20 which has a narrow bore and which is referred to herein as a hypodermic tube, extends into the passage 14 so that the downstream end thereof is situated in, or adjacent to the constriction 18. The longitudinal position of the hypodermic tube 20 may be adjustable with respect to the constriction 18 by adjusting means (not shown), so that the downstream end of the hypodermic tube 20 can be located at the zone of minimum pressure.

Downstream of the constriction 18 a pair of vent tubes 22 communicate with the passage 14, one on either side thereof. Each vent tube 22 communicates with atmosphere via a control valve 23 which allows a controlled, adjustable amount of air to pass from the vent tube to atmosphere. The end of each vent tube remote from its connection to the passage 14 may communicate with a noise suppressor, which is a chamber designed to absorb noise generated by the flow of high pressure air venting to atmosphere. Other forms of venting can be used instead of the pair of vent tubes.

In operation, air of low moisture content is introduced into the side arm 16 at high pressure, for example 100 psig and flows at high velocity through the constriction 18 which acts as a venturi. The venturi exploits the properties of a gas flow passing through a constriction. Within the constriction the axial pressure distribution exhibits a minimum. The dimensions of the venturi, the values of the supply pressure and the mass flow rate of air are selected so that the minimum pressure is below atmospheric pressure. In the majority of practical embodiments of the venturi device the velocity of the air flow in the constriction will reach the speed of sound. In some embodiments the flow throughout the venturi device will remain entirely subsonic. In either case this produces a steep rising pressure gradient, accompanied throughout by continued forward flow over a short region just downstream of the exit plane of the hypodermic tube. The flow of air into the hypodermic tube 20 which results from atmospheric pressure at its upstream end and the sub-atmospheric pressure at its downstream end assists in moving the optical fibre member throughout the tube 20, providing the optical fibre member with sufficient kinetic energy to make it through the passage 14 with its pressure gradient region, and thence into the duct 2.

On the downstream side of the rising high pressure gradient region, and upstream of the vent tubes 22 drag on the optical fibre member increases considerably due to the high velocity in this zone, thus assisting in injecting the fibre member into the duct 2. The high velocity zone is denoted in Figure 2a by reference numeral 24. In this way the optical fibre member is transported into the duct 2, and the force developed in the venturi device continues to assist the forward motion of the fibre as it progresses through the duct 2.

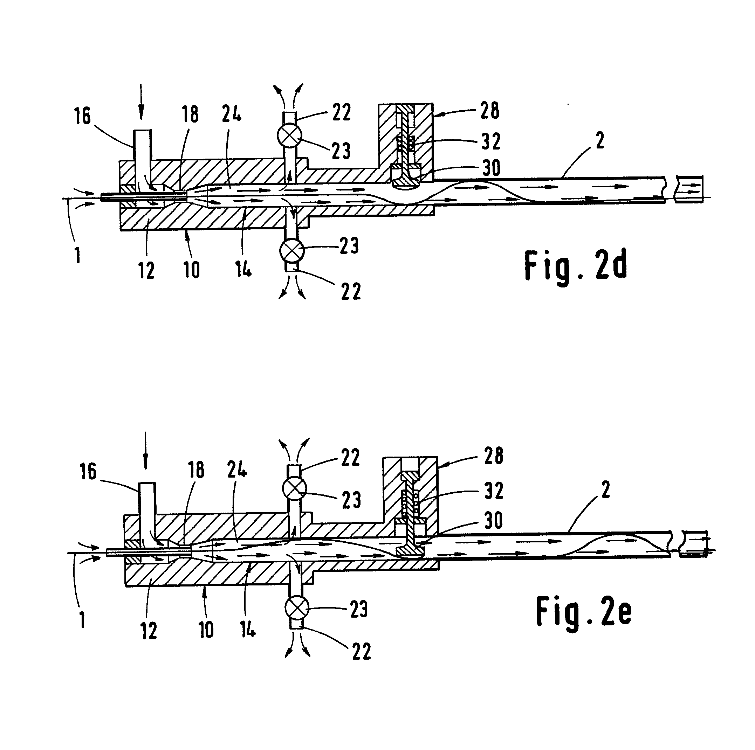

Downstream of the vent tubes 22 the velocity of the air flow is much lower than in the high velocity zone 24, and this provides what is referred to below, for reasons which will become apparent, as an accumulator zone 26. At the downstream end of the zone 26 there is provided a fibre retention device 28. This comprises, by way of illustration, a piston 30 which is movably radially with respect to the passage 14 between a retracted position shown in Figures 2a and 2c, and a fibre clamping position shown in Figure 2b, 2d and 2e. The piston is biased into its retracted position by a spring 32 and urged into its clamping position by pneumatic or hydraulic pressure, by electromechanical means, or any other suitable means (not shown).

In the state shown in Figure 2a the optical fibre member 1 is transported unhindered into the duct 2. If the apparatus were to remain in the state shown in Figure 2a, some ripples might be produced in the fibre member 1 and propagated along the fibre member 1, as a result of the interaction of the venturi device and whatever means are used to supply the fibre member to the venturi device (for a discussion of this see below with reference to Figures 4a to 5b), but such ripples would be generated irregularly. However, the apparatus next goes to the state shown in Figure 2b, with the piston 30 moving to its fibre clamping position. This causes the fibre member to accumulate upstream of the piston, thus starting to produce a ripple, and, as shown in Figure 2c, continued accumulation of the fibre member produces a ripple 4 occupying the whole of what is, substantially, a sinusoidal wave.

As shown in Figure 2d, the piston 30 is then retracted, and the ripple 4 is able to propagate down the fibre member 1. The piston 30 then returns to its clamping position, as shown in Figure 2e, and a further ripple begins to form. The apparatus is thus able to produce and propagate a succession of ripples.

Figures 3a to 3d show successive stages in the operation of an alternative embodiment. This too has a fibre retention device 28, which can be the same as the device 28 shown in Figures 2a to 2e and is therefore not shown here in detail. The apparatus of Figures 3a to 3d differs from that of Figures 2a to 2e in that the venturi device is replaced by an insertion device having a pair of wheels 40 which grip the fibre member 1 and urge it forwardly. The wheels are located in a chamber 42 which is maintained at a pressure above atmospheric. The air which is to flow down the duct 2 is introduced through an air inlet 44 to a location immediately upstream of the wheels 40.

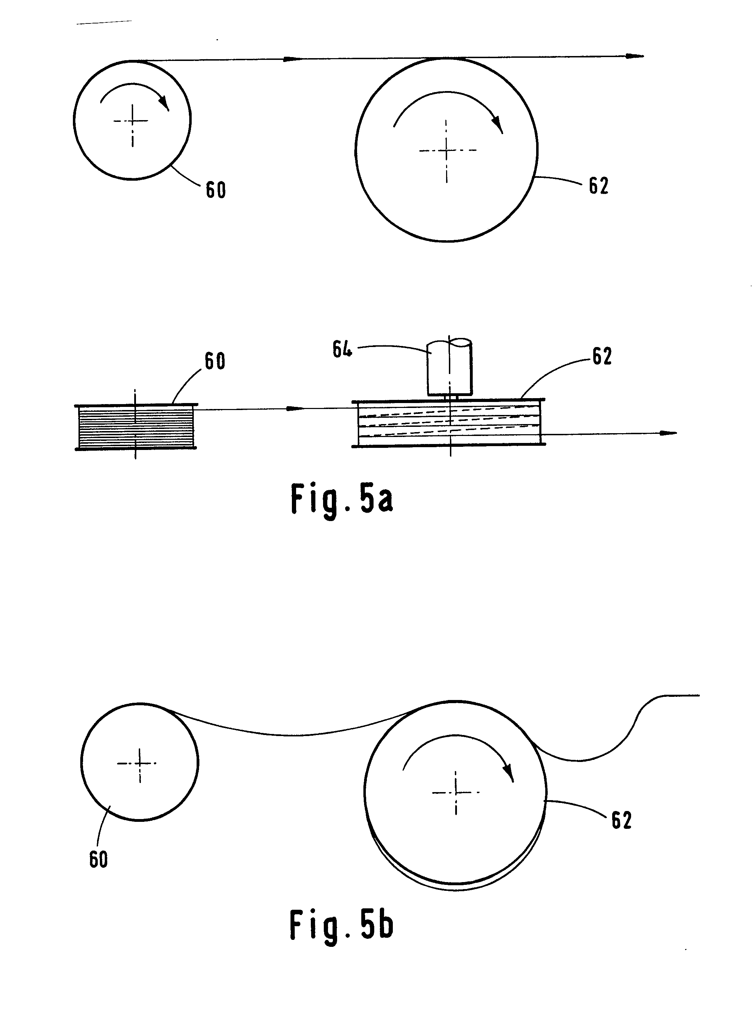

Figures 4a to 4c and Figures 5a to 5b show another embodiment, this time one in which ripples are generated at irregular intervals but nevertheless frequently enough to play a significant role in the transport of the fibre member through the duct. For convenience of illustration, the ripple is shown as being approximately helical, but it must be understood that, depending on the conditions, the ripple might assume some other shape.

As in Figures 2a to 2e, the arrangement shown in Figures 4a to 4c, and Figures 5a to 5b, uses a venturi device, which is here represented by reference numeral 50. The venturi device has hypodermic tube 52 through which the optical fibre member 1 enters, a side arm 54 through which air is supplied under pressure and vent tubes 56 controlled by control valves 58. The venturi device serves to introduce the fibre member 1 into the upstream end of the duct 2.

The fibre member 1 is introduced into the tube 20 from a freely rotating fibre reel 60 (see Figures 5a and 5b) via a capstan 62 around which several turns are wound. Drive is applied to the capstan 62 via a drive shaft 64 which is indicated in part. The effect of this method of fibre introduction can be seen in Figures 4a to 4c. In Figure 4a the amount of fibre which has been fed by the venturi device into the duct 2 is less than the amount which the capstan has unreeled from the fibre reel 60. Accordingly a fibre loop 66 appears between the capstan and the inlet to the tube 52. Because the fibre member is now no longer tensioned around the capstan it is no longer driven by the capstan, which continues to rotate while leaving the fibre member unaffected.

As the fibre member is fed by the venturi device into the duct 2 the loop 66 is taken up, and the fibre member is once again tensioned around the capstan which then resumes driving it forwardly to the tube 52. This is shown in Figure 4b. When, once again, more fibre is fed to the venturi device than it can feed into the duct the loop 66 reappears, as shown in Figure 4c.

As indicated in Figures 4a to 4c, slack is produced in the fibre member at the upstream end of the duct 2. This is achieved by venting a proportion of the air flow through the vent tubes such that the fluid drag force exerted on the fibre member in the duct 2 (taken in conjunction with the other forces acting on it) is insufficient to carry the fibre found at the rate at which it is being conveyed to the duct by force imparted to it by the venturi.

Some experimental results are set out below which demonstrate the method of the present invention and compare it to the prior art. Reference will first be made to Tables 1 to 3. These record the results achieved in installing optical fibre members into a 100m length of tubular duct made of medium density polyethylene, wound on the outside of a drum 0.75 m in diameter.

In the case of Table 1 one single buffered fibre was installed. The single buffered fibre had a buffering layer of foamed ethylene vinyl acetate and had the parameters given hereinabove for such a fibre. Installation was by means of an apparatus as shown in Figures 4a to 4c, 5a and 5b. An air flow through the duct was generated by having the air pressure at the upstream end of the duct at 0.7 bar above atmospheric, and atmospheric pressure at the downstream end. The air flow varied over the course of installation, but was 5.3 l/min by the time the fibre was fully installed.

In the case of Table 2 an optical fibre member of the type described in EP-A-157610 was installed using a wheeled head of the same general design as that shown in EP-A-108590. The fibre member had four individual optical fibres held in an outer sheath arrangement. The pressure across the duct was 1.0 bar and the air flow through the duct with the fibre member fully installed was 5.2 l/min. The wheels of the wheeled head were driven by a constant torque motor.

In Table 3, the same fibre was installed as in Table 2, but the pressure was 2.0 bar and the air flow through the duct with the fibre member fully installed was of 9.5 l/min.

TABLE 1

| VENT FLOW Arbitrary units | DISTANCE BLOWN (M) IN 1 MIN | NO.RIPPLES IN IN 1 MIN | CAPSTAN REV/MIN |
|---|---|---|---|
| 42 | 0.1 | - | 60 |
| 44 | 0.46 | - | 60 |
| 45.5 | 1.57 | - | 60 |
| 46 | 2.14 | - | 60 |
| 47 | 2.73 | 7 | 60 |
| 48 | 3.97 | 50 | 60 |
| 50 | 7.60 | 153 | 60 |
| 52 | 9.77 | 176 | 60 |
| 53 | 13.45 | 125 | 60 |
| 55 | 15.72 | 154 | 60 |
| 58 | 15.94 | 151 | 60 |
| 62 | 17.53 | 149 | 60 |
| 82 | 17.92 | 134 | 60 |
| 100 | 16.87 | 139 | 60 |

1. Vent flow is the appropriate total flow through both vent tubes.

2. Distance blown is the distance travelled by the optical fibre member.

3. No. ripples in 1 min, is the number of ripples observed passing a given point near the upstream end of the duct.

4. Capstan rev/min is the rate of rotation of the capstan 62.

TABLE 2

| MOTOR TORQUE (arbitrary units) | DISTANCE BLOWN In 1 min (m) | NO. OF RIPPLES |
|---|---|---|
| 8 | 0.96 | - |
| 9 | 2.36 | - |
| 10 | 2.74 | - |
| 11 | 2.60 | - |
| 12 | 2.58 | - |
| 13 | 2.46 | - |
| 15 | 2.48 | - |
| 18 | UNIT FAILED | - |

1. The motor torque is uncalibrated, but increasing values represent increasing torque.

2. "Unit failed" represents failure to transport the fibre member at all.

7

TABLE 3

| MOTOR TORQUE (arbitrary units) | DISTANCE BLOWN In 1 min (m) | NO. OF RIPPLES |
|---|---|---|
| 8 | 2.31 | - |
| 9 | 4.10 | - |
| 10 | 5.67 | - |
| 11 | 7.64 | * |
| 12 | 7.61 | * |
| 13 | 6.57 | * |
| 14 | 6.54 | * |
| 18 | 5.98 | * |
| 22 | 5.35 | * |
| 27 (MAX) | 4.84 | * |

* Evidence of rippling but too slight to permit measurement.

As can be seen from Table 1, the speed at which the very flexible single buffered fibre travels increases sharply once the vent flow is increased to a level at which ripples are observed. In contrast, in Table 2, relating to a much stiffer fibre member, no ripples were observed and only a low speed of travel was obtained. In Table 3, relating to the same stiffer fibre member at a higher air pressure, some ripples were observed but only a modest increase in the speed of travel was obtained.

It should be noted that although ripples can be induced in the stiffer fibre member, and a modest increase in the speed of travel obtained by operating under conditions where such ripples exist, the art in relation to such stiffer fibre members contains express instructions that buckling of the fibre member is to be avoided in case the fibre member should jam in the duct in which it is being installed.

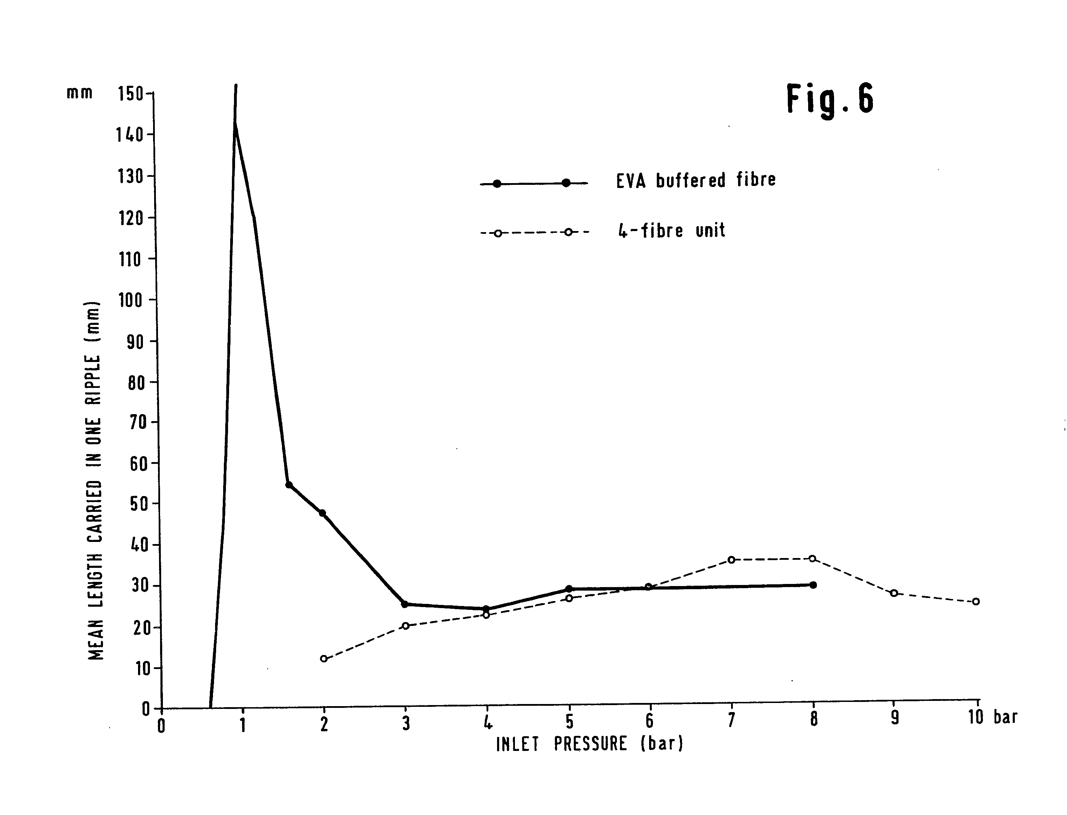

Further experimental results are presented in the graph which constitutes Figure 6, illustrating the length in one ripple, for a flexible buffered fibre compared with a stiffer fibre member. These show the existence of ripples containing significant excess length at lower pressures in the case of buffered fibre, thus creating the conditions for wave propagation.

## Claims

1. A method of conveying an optical fibre member along a tubular passageway, which comprises introducing slack into the said fibre member at the upstream end of the passageway and causing air or other fluid to flow along the passageway in the intended direction of travel of the said fibre member, the fibre member being sufficiently flexible to permit the slack to propagate along the fibre member.

2. A method according to claim 1, wherein the slack is generated by feeding the said fibre member to the upstream end of the passageway via a means which receives the said fibre member substantially continuously but which prevents its being passed to the said upstream end for long enough to produce the said slack.

3. A method according to claim 1, wherein the slack is generated by transverse oscillation of the said fibre member.

4. A method according to claim 1, wherein the said slack is generated by feeding the said fibre member into the passageway at a speed which intermittently exceeds the speed at which the said fibre member is being carried through the passageway.

5. A method according to any preceding claim, wherein the said fibre member is fed into the tubular passageway by means of a device which comprises a venturi serving to impart a longitudinal force on the said fibre member.

6. A method according to any preceding claim, wherein the said fibre member comprises a single optical fibre surrounded by a buffering layer.

7. A method according to any preceding claim, wherein the slack has the shape of a ripple which, when fed into the upstream end of the passageway is such that the maximum angle of the said fibre member in the ripple to the overall direction of travel of the said fibre member is not substantially less than 90°.

8. A method according to any preceding claim, wherein a succession of lengths of slack is introduced into the said fibre member.

9. A method according to any preceding claim, wherein the fibre member has a value of flexural rigidity EI which is less than $10^{-4}$ Nm$^2$, where E is the Young's modulus of the fibre member and I is the second moment of area.

10. A method according to claim 9, wherein EI is less than $10^{-5}$ Nm$^2$.

11. A method according to claim 9, wherein EI is less than $10^{-6}$ Nm$^2$.

12. A method according to any preceding claim, wherein a plurality of the said fibre members travel simultaneously along the passageway.

13. A method according to any preceding claim, wherein the supply of air or other fluid is pulsed.

14. An apparatus for feeding an optical fibre member into a tubular passageway, comprising means for introducing slack into the said fibre member at the upstream end of the passageway.

15. An apparatus according to claim 14, comprising means for feeding the said fibre member substantially continuously towards the upstream end of the passageway, and means for preventing the said fibre member being passed to the said upstream end for long enough to produce the said slack.

16. An apparatus according to claim 14, comprising means for transversely oscillating the said fibre member to produce the said slack.

17. An apparatus according to claim 14, comprising means for feeding the said fibre member into the passageway at a speed which intermittently exceeds the speed at which the said fibre member is being carried through the passageway.

18. An apparatus according to any one of claims 14 to 17, operable to produce a succession of lengths of slack in the said fibre member.

AIR

3    4    1    2

**Fig. 1a**

AIR

3    4    1    2

**Fig. 1b**

AIR

3    1    4    2

**Fig. 1c**

AIR

3    1    2

$\rightarrow l \leftarrow$

**Fig. 1d**

**Fig. 2a**

**Fig. 2b**

**Fig. 2c**

EP 0 338 856 A2

Fig. 2d

Fig. 2e

Fig. 3a

Fig. 3b

Fig. 3c

Fig. 3d

Fig. 4a

Fig. 4b

Fig. 4c

**Fig.5a**

**Fig.5b**

Fig.6

● ——— ● EVA buffered fibre

○ – – – ○ 4-fibre unit

MEAN LENGTH CARRIED IN ONE RIPPLE (mm)

INLET PRESSURE (bar)

EP 0 338 856 A2